(19) **Europäisches Patentamt**

**European Patent Office**

**Office européen des brevets**

(11) **EP 0 816 141 B1**

(12) **FASCICULE DE BREVET EUROPEEN**

(45) Date de publication et mention
de la délivrance du brevet:
**22.11.2000 Bulletin 2000/47**

(51) Int Cl.⁷: **B60G 17/015**, F16F 15/027

(21) Numéro de dépôt: **97401585.1**

(22) Date de dépôt: **03.07.1997**

(54) **Amortisseur semi-actif à contrôle continu en effort**

Kontinuierlich kraftgeregelter, semiaktiver Stossdämpfer

Continuously force controlled semi-active damper

(84) Etats contractants désignés:
**AT BE CH DE DK ES FI FR GB GR IE IT LI LU NL
PT SE**
Etats d'extension désignés:
**RO**

(30) Priorité: **05.07.1996 FR 9608406**

(43) Date de publication de la demande:
**07.01.1998 Bulletin 1998/02**

(73) Titulaire: **GEC ALSTHOM TRANSPORT SA**
**75116 Paris (FR)**

(72) Inventeurs:
• **Boichot, Philippe**
**71200 Le Creusot (FR)**

• **Kirat, Régis**
**71200 Le Creusot (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
**EP-A- 0 691 226      WO-A-91/06439**
**DE-A- 4 202 091**

**Description**

La présente invention concerne les circuits de commande des amortisseurs comportant une boucle de commande directe comprenant un modèle inverse de l'amortisseur, en général, et porte plus particulièrement, sur un amortisseur semi-actif à contrôle continu en effort.

On connaît, à ce jour, différentes techniques de commande des amortisseurs de véhicules automobiles.

Ainsi, par exemple, DE-A-42 020 91 utilise une mesure du mouvement relatif entre le châssis et les roues du véhicule pour le réglage des valves d'un amortisseur.

Dans WO-A-91/064 39, l'énergie dissipée lors du déplacement du piston d'un amortisseur est réglée à partir d'une mesure de la vitesse de déplacement du piston.

La demande de brevet français FR 94 08 337 de la demanderesse, également publiée sous le numero EP-A-691 226, pose le principe général du suivi en effort par modèle inverse selon un schéma en boucle ouverte.

Conformément aux caractéristiques essentielles de l'amortisseur semi-actif commandé par un circuit de commande décrit dans cette demande de brevet français FR 94 08 337, le circuit de commande comporte une boucle de commande directe composée d'un modèle inverse de l'amortisseur.

De plus, le modèle inverse de l'amortisseur détermine une valeur d'un courant électrique théorique $i_{th}$ de commande d'une valve de détente à partir d'une mesure d'une valeur d'une vitesse relative $\dot{y}$ entre deux extrémités de l'amortisseur et d'une valeur de consigne d'effort Fc.

Une boucle de rétroaction en effort introduit au courant électrique théorique $i_{th}$ de commande un terme correctif $\delta i$ de type proportionnel de manière à tenir compte d'une erreur d'effort $\varepsilon F$ entre la valeur de consigne d'effort Fc et la valeur mesurée de la force effective F exercée.

Le modèle inverse de l'amortisseur est défini par les expressions :

$$ith = K_{23}\frac{\left|\dot{y}\right|}{\sqrt{\left|Fc\right|}}\,,$$

en phase de détente ($\dot{y} > 0$), et

$$ith = K_{13}\frac{\left|\dot{y}\right|}{\sqrt{\left|Fc\right|}}\,,$$

en phase de compression ($\dot{y} < 0$),

où $K_{13}$ et $K_{23}$ sont des constantes positives dépendant de la taille du vérin, des caractéristiques physiques de l'huile ainsi que du gain en débit des valves hydrauliques.

Le modèle inverse de l'amortisseur ainsi défini suppose l'incompressibilité du fluide.

Cette hypothèse n'est toutefois pas valable pour toute les applications.

Aussi un but de l'invention est-il un dispositif de contrôle continu en effort d'un amortisseur semi-actif, permettant de s'affranchir du problème de compressibilité du fluide.

Conformément à l'invention, l'amortisseur semi-actif est commandé par un circuit de commande selon la revendication 1.

La boucle de commande est dite directe du fait qu'elle ne nécessite pas l'emploi de capteurs de force.

Un avantage de l'amortisseur semi-actif de l'invention ainsi caractérisé est qu'il prend en compte la compressibilité du fluide au travers du calcul de vitesses équivalentes $\dot{y}_e$.

L'amortisseur semi-actif de l'invention satisfait également à l'une au moins des caractéristiques suivantes:

- ledit modèle inverse de l'amortisseur détermine une valeur d'un courant électrique théorique $i_{th}$ de commande d'une valve de compression et d'une valve de détente, ou d'une valve unique regroupant ces deux fonctions, à partir d'une mesure d'une valeur d'une vitesse relative $\dot{y}$ entre deux extrémités de l'amortisseur et d'une valeur de consigne d'effort Fc, des vitesses équivalentes $\dot{y}_e$ étant déduites de ladite vitesse relative $\dot{y}$,
- ledit modèle inverse de l'amortisseur comporte:

. un premier bloc d'estimation de la perte de charge ΔPCL du clapet ouvert, à savoir: le clapet de détente, en détente, et le clapet de compression, en compression,

. un deuxième bloc d'estimation de la perte de charge ΔPV de la valve active,

. un troisième bloc de calcul de l'intensité de commande $i_{th}$ idéale de la valve,

. un quatrième bloc de calcul du terme correctif $\delta\dot{y}$ à la vitesse $\dot{y}$,

. un sommateur,

- ledit premier bloc assure le calcul de la perte de charge ΔPCL au niveau du clapet ouvert,
- ladite grandeur de sortie ΔPCL dudit premier bloc est interpolée à partir d'un réseau de caractéristiques tabulées en fonction des grandeurs d'entrée $\dot{y}$ et $i_{th}$ dudit premier bloc,
- ledit deuxième bloc assure l'estimation de la perte de charge ΔPV à réaliser par la valve de commande active placée entre la chambre sous pression et l'accumulateur,
- la sortie ΔPV du bloc est calculée en fonction des deux entrées du bloc Fc et ΔPCL :

$$\Delta PV = ( Fc - \Delta PCL\ S2) / S1,$$

en détente (valve 10)

$$\Delta PV = (-Fc - \Delta PCL\ S1) / S2,$$

en compression (valve 9),

- l'information de vitesse mesurée $\dot{y}$ est corrigée par la sortie $\delta\dot{y}$ d'un bloc pour former en sortie d'un sommateur, une vitesse équivalente $\dot{y}e = \dot{y} + \delta\dot{y}$,
- ledit quatrième bloc calcule le terme de vitesse correctif $\delta\dot{y}$,
- ledit terme de vitesse correctif $\delta\dot{y}$ est donné par l'expression:

$$\delta\dot{y} = \varepsilon(\dot{y})\ r(\dot{y})\ \frac{d\Delta Pv}{dt},$$

- ledit troisième bloc assure le calcul de l'intensité de commande $i_{th}$ idéale en fonction des deux entrées ΔPV et $\dot{y}_e$ dudit troisième bloc,
- lesdites valves ont été préalablement caractérisées par l'identification d'un gain non linéaire K(i) reliant la perte de charge mesurée ΔPV mesure à la valve, la vitesse équivalente mesurée yemesuré construite à partir des mesures de ΔPV mesure et $\dot{y}$ et l'intensité i, sous la forme:

$$K(i) = \frac{\Delta Pv_{\ mesure}}{|\dot{ye}_{\ mesure}|\ \dot{ye}_{\ mesure}}\ ,$$

- on détermine l'intensité $i_{th}$ réalisant pour les grandeurs calculées en sortie du deuxième bloc ΔPV et en sortie du sommateur $\dot{y}e$, l'identité

$$K(ith) = \frac{\Delta Pv}{|\dot{ye}|\ \dot{ye}}\ ,$$

$i_{th}$ est par exemple déterminée en minimisant la fonction d'erreur $\varepsilon K(i)$ sur l'ensemble des intensités admissibles, c'est à dire $i_{th}$ telle que:

$$\varepsilon K(ith) = \min_{i}[\varepsilon K(i)] = \min_{i}\left[\left|K(i) - \frac{\Delta Pv}{|\dot{ye}|\ \dot{ye}}\right|\right],$$

expression dans laquelle:

K(i) est le gain non linéaire identifié à partir des mesures,
$\Delta$PV est la perte de charge à réaliser, calculée en sortie du deuxième bloc,
$\dot{y}_e$ est la vitesse équivalente calculée en sortie du sommateur,

- une boucle secondaire de rétroaction, introduit audit courant électrique théorique principal $i_{th}$ de commande, un terme correctif mineur $\delta i$ de type proportionnel de manière à tenir compte d'une erreur d'effort $\varepsilon F$ entre ladite valeur de consigne Fc et une valeur mesurée d'une force effective F exercée.

Un autre avantage du dispositif de contrôle continu en effort d'un amortisseur semi-actif de l'invention est de suivre un effort de consigne dissipatif c'est-à-dire de réaliser de façon continue une infinité de lois force-vitesse relative contrairement aux amortisseurs pilotés de l'art antérieur dont les systèmes de contrôle ne permettent d'assurer qu'un nombre limité de caractéristiques.

Un autre avantage du dispositif de contrôle continu en effort d'un amortisseur semi-actif de l'invention est de permettre l'utilisation de composants hydrauliques, dans le cas d'un amortisseur hydraulique, standards bas de gamme.

Un autre avantage du dispositif de contrôle continu en effort d'un amortisseur semi-actif de l'invention est d'autoriser un fonctionnement satisfaisant du système avec une instrumentation réduite à un seul capteur de vitesse.

Par exemple, dans le cas d'une détérioration du capteur de force, le terme correctif $\delta i$ est neutralisé et mis à zéro, la contribution principale $i_{th}$ au courant de commande, fondée sur la valeur de l'effort de consigne Fc et la seule mesure de sollicitation de l'amortisseur, maintien une précision suffisante.

Un autre avantage du dispositif de contrôle continu en effort d'un amortisseur semi-actif de l'invention est de pouvoir suivre, lors des phases dissipatives du mouvement, une loi de commande formulée en termes d'effort.

D'autres buts, caractéristiques et avantages de l'invention apparaîtront à la lecture de la description du mode de réalisation préféré du dispositif de contrôle continu en effort d'un amortisseur semi-actif, description faite en liaison avec les dessins dans lesquels:

- la figure 1 représente un schéma de principe de l'amortisseur semi-actif piloté tel que décrit dans la demande de brevet français FR 94 08 337 de la demanderesse,
- la figure 2 représente un schéma de principe du circuit de commande de l'amortisseur semi-actif piloté tel que décrit dans la demande de brevet français FR 94 08 337 de la demanderesse,
- la figure 3 représente un schéma de principe de l'amortisseur semi-actif piloté conforme à l'invention,
- la figure 4 représente un schéma de principe du circuit de commande de l'amortisseur semi-actif piloté à contrôle continu en effort conforme à la présente invention.

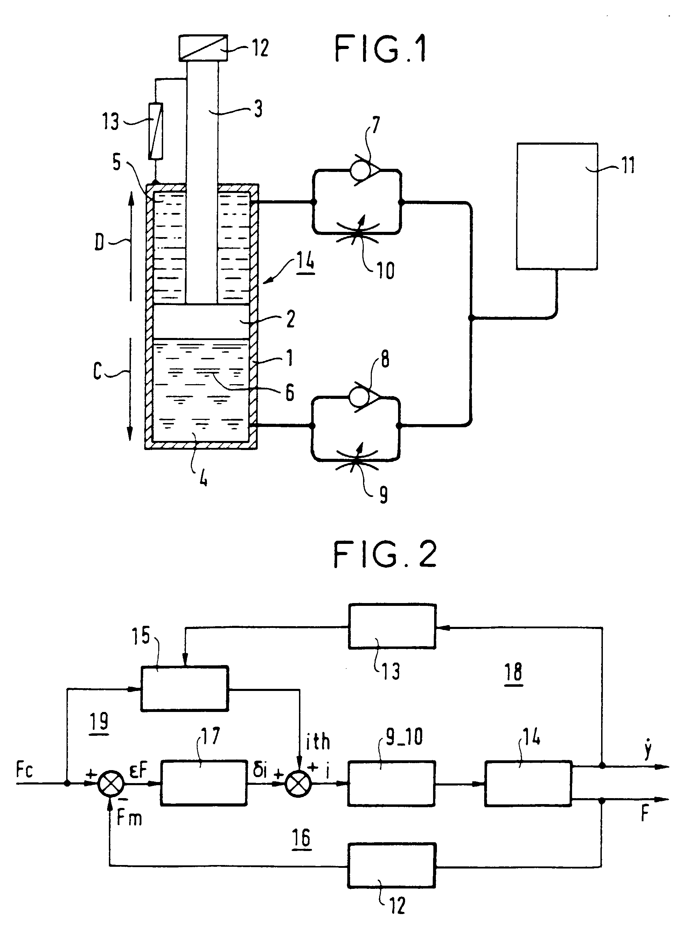

La figure 1 représente un schéma de principe de l'amortisseur semi-actif piloté tel que décrit dans la demande de brevet français FR 94 08 337 de la demanderesse.

L'amortisseur semi-actif piloté conforme à l'invention comporte un corps 1 dans lequel coulisse un piston 2 plein muni d'une tige 3 l'ensemble constituant un vérin 14.

Le piston 2 délimite une première chambre 4 dite chambre de compression et une seconde chambre 5 dite chambre de détente.

Le corps 1 est rempli d'un fluide 6, par exemple d'huile hydraulique.

L'amortisseur semi-actif comprend également un premier clapet anti-retour 7 dit clapet de compression et un second clapet anti-retour 8 dit clapet de détente.

Une première valve hydraulique 9 dite valve de compression et une seconde valve hydraulique 10 dite valve de détente sont pilotées électriquement.

L'amortisseur semi-actif comprend également un accumulateur 11, faiblement préchargé lors du montage de l'amortisseur semi-actif, constitué d'une chambre.

Un tel accumulateur, par exemple oléopneumatique, forme un volume fixe comprenant un gaz inerte sous pression et de l'huile hydraulique à laquelle le gaz communique sa pression.

Un tel accumulateur 11 oléopneumatique forme un volume fixe comprenant un gaz inerte sous pression et de l'huile hydraulique à laquelle le gaz communique sa pression.

Les deux fluides sont généralement séparés physiquement par une membrane ou une vessie.

La fonction de cet accumulateur consiste, d'une part, à absorber le volume d'huile correspondant au volume de la tige lorsque l'amortisseur est complètement comprimé et, d'autre part, à assurer une pression minimale dans le circuit hydraulique.

Il est important de noter que le fonctionnement de l'amortisseur semi-actif de l'invention ne nécessite aucune source de puissance hydraulique externe de type centrale hydraulique ou accumulateur haute pression.

Le clapet de compression 7 et la valve de détente 10 sont montés en parallèle et sont disposés entre la chambre de détente 5 et la chambre de l'accumulateur 11.

Le clapet de détente 8 et la valve de compression 9 sont montés en parallèle et sont disposés entre la chambre de compression 4 et la chambre de l'accumulateur 11.

Enfin, l'amortisseur semi-actif comprend un capteur de force 12 et un capteur de vitesse relative 13.

La figure 2 représente un schéma de principe de la commande de l'amortisseur semi-actif piloté tel que décrit dans la demande de brevet français FR 94 08 337 de la demanderesse.

Les références utilisées dans cette figure 2 et leur signification sont indiquées ci-après:

Fc:    consigne de force,

F:     force effective,

Fm:    mesure par capteur de la force effective F,

$\varepsilon F$ :    erreur d'effort, $\varepsilon F = Fc - Fm$,

$\dot{y}$:     vitesse relative entre les deux extrémités de l'amortisseur,

i :    courant électrique de commande des valves,

$i_{th}$:    courant de commande théorique déterminé par le modèle inverse et à appliquer aux vannes hydrauliques pour obtenir l'effort Fc,

$\delta i$ :    correction supplémentaire à $i = i_{th} + \delta i$ pour tenir compte de l'erreur d'effort $\varepsilon F$.

Le fonctionnement hydraulique de cet amortisseur semi-actif piloté est décrit ci-après en liaison avec les figures 1 et 2.

On distingue deux phases dans le fonctionnement hydraulique de cet amortisseur semi-actif piloté:

- une première phase dite phase de compression, symbolisée sur la figure 1 par la flèche C, et
- une phase dite phase de détente, symbolisée sur la figure 1 par la flèche D.

Lors de la phase de compression le piston 2 pénètre dans le corps 1 du vérin et lors de la phase de détente le piston 2 sort du corps 1 du vérin.

En phase dite de compression, le fluide 6 contenu dans la chambre de compression 4 est comprimé. Le clapet anti-retour de détente 8 est bloqué, ce qui force le fluide à passer par la valve de compression 9.

Le clapet anti-retour de compression 7 permet au fluide 6 de court-circuiter la valve de détente 10 et de remplir librement la chambre de détente 5.

Le pilotage de la valve de compression 9 permet de contrôler le niveau de pression dans la chambre de compression 4 et donc de contrôler l'effort de réaction exercé en compression.

En phase dite de détente, le rôle des organes est inversé.

La valve de détente 10 contrôle le passage du fluide 6 de la chambre de détente 5 vers la chambre de l'accumulateur 11, ce qui permet de moduler l'effort de détente.

Le clapet de détente 8 est actif et laisse libre le passage du fluide 6 de la chambre de détente 5 vers la chambre de l'accumulateur 11.

Les valves de compression 9 et de détente 10 sont pilotées de préférence électriquement de façon à moduler l'effort d'amortissement qui est toujours opposé à la vitesse.

Il résulte de ce qui précède que l'amortissement reste un système dissipatif.

La modulation de l'effort exercé permet d'asservir cet effort à une consigne d'effort Fc élaborée par un calculateur (non représenté).

Le problème de base consiste à déterminer le courant de commande i à appliquer aux valves de compression 9 et de détente 10 pour réaliser la consigne d'effort Fc.

L'exploitation des relations qui traduisent l'équilibre des débits volumiques de chaque chambre de l'amortisseur à vitesse constante, et ce pour les phases de compression et de détente, a permis de déduire une relation simple entre le courant $i_{th}$ délivré par un modèle inverse 15 de l'amortisseur, la vitesse relative instantanée $\dot{y}$ et l'effort d'amortissement.

Cette relation est par exemple donnée par la formule suivante, en phase de détente:

$$F = \frac{\rho}{2}\left(\frac{S_2}{Gi.i}\right)^2 \cdot S_2 \cdot \dot{y}^2 + \frac{\rho}{2}\left(\frac{S_1}{Cd.A_{31}(\Delta P_{31})}\right)^2 \cdot S_1 \cdot \dot{y}^2 - (P_3 - Pe) \cdot St$$

où:

F       est l'effort d'amortissement exercé,

$\rho$       la masse volumique de l'huile,

S$_1$     la section du piston, côté sans tige, soumise à la pression,
S$_2$     la section du piston, côté tige, soumise à la pression,
St     la section de la tige,
ẏ     la vitesse relative,
Gi     le gain en pression de la valve de commande,
i     le courant de commande,
Cd     le coefficient de débit du clapet anti-retour de détente,
A$_{31}$     la section de passage géométrique du clapet anti-retour de détente,
ΔP$_{31}$     la perte de charge entre l'accumulateur et la chambre mise en dépression,
P$_3$     la pression dans l'accumulateur et
Pe     la pression atmosphérique.

L'exploitation de ce modèle d'amortisseur, dans le sens où, en fonction de l'effort désiré Fc et de la vitesse mesurée ẏ, on cherche le courant i$_{th}$ à appliquer aux organes de commande, revient à exploiter un modèle inverse 15 de l'amortisseur.

Du fait des simplifications dans l'établissement de la loi d'amortissement et donc dans le modèle inverse 15 de l'amortissement, un terme correctif δi de type proportionnel est introduit par le biais d'une boucle de rétro-action 16 en effort.

Cette boucle de rétroaction 16 permet, par la mesure Fm, au moyen du capteur de force 12 de l'effort F exercé, de réaliser le signal d'erreur εF entre la force de consigne Fc et la force mesurée Fm.

Ce signal d'erreur εF est appliqué à un correcteur 17, lequel délivre la correction supplémentaire δi au courant de commande i des valves 9, 10.

La valeur de la vitesse relative ẏ est introduite dans le modèle inverse 15 de l'amortisseur par le biais d'une boucle de rétroaction 18 en vitesse.

La boucle de rétro-action 18 en vitesse inclue le capteur de vitesse 13.

La valeur du courant théorique i$_{th}$ de commande est déterminée par le modèle inverse 15 de l'amortisseur.

Ce courant théorique i$_{th}$ de commande est appliqué aux valves hydrauliques, pour obtenir l'effort Fc, par le biais d'une boucle de commande directe 19.

La boucle de commande directe 19 inclue le modèle inverse 15 de l'amortisseur lequel est défini, par exemple, par les expressions:

$$i_{th} = K_{23} \; \frac{|y|}{\sqrt{|Fc|}} \; ,$$

en phase de détente (ẏ>0), et

$$i_{th} = K_{13} \; \frac{|y|}{\sqrt{|Fc|}} \; ,$$

en phase de compression (ẏ<0),
où K$_{13}$ et K$_{23}$ sont des constantes positives dépendant de la taille du vérin, des caractéristiques physiques de l'huile ainsi que du gain en débit des valves hydrauliques.

Cet amortisseur semi-actif trouve une application en tant que suspension secondaire transversale d'un véhicule ferroviaire de transport de voyageurs.

La description qui suit porte sur un amortisseur semi-actif à contrôle continu en effort selon la présente invention.

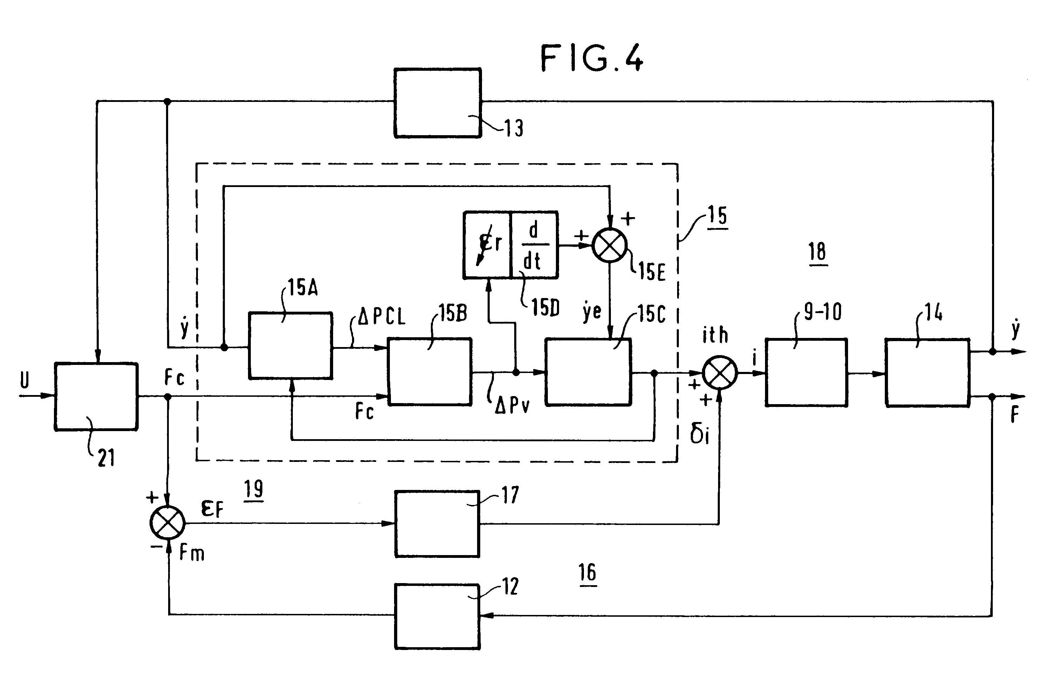

La figure 4 représente un mode de réalisation préféré du schéma de principe du circuit de commande de l'amortisseur semi-actif à contrôle continu en effort selon la présente invention.

Le schéma de principe représenté sur cette figure 4 complète donc le schéma de principe de l'amortisseur semi-actif piloté et tel que décrit dans la demande de brevet français FR 94 08 337 de la demanderesse.

Les éléments communs aux figures 2 et 4 portent les mêmes références.

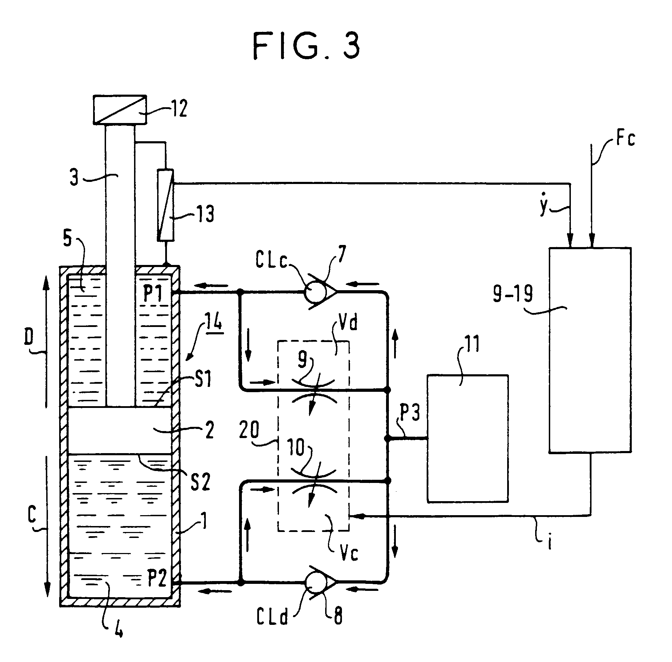

Le correcteur 17 et le capteur de force 12 figurent aux figures 3 et 4 bien qu'ils sont optionnels et ne sont donc pas utilisés en pratique.

Un amortisseur conventionnel restitue un effort hydraulique dissipatif Fv en fonction de sa vitesse de sollicitation ẏ sans possibilité de réglage externe.

Pour l'amortisseur piloté, l'idée de base consiste à inverser cette causalité, à savoir, à partir de la connaissance

de la vitesse $\dot{y}$ et de l'effort de consigne $F_c$, déterminer le paramètre de réglage (intensité $i_{th}$ de commande de la valve) permettant d'obtenir Fv = $F_c$.

A partir de la compréhension du comportement physique du dispositif, a donc été mis en place un modèle du système permettant de relier la vitesse $\dot{y}$, l'effort de consigne Fc et l'intensité de commande $i_{th}$ puis on a développé un modèle inverse.

Des vitesses équivalentes $\dot{y}_e$ ont été déduites de la vitesse $\dot{y}$ plutôt que de travailler à partir de la vitesse $\dot{y}$ elle-même de manière à étendre ce schéma de commande au cas présent de système avec un fluide compressible.

La description qui suit concerne le schéma de commande en boucle ouverte.

Les techniques d'asservissement classique élaborées à partir d'un signal d'erreur ($\varepsilon$F=Fv-$F_c$) sont inefficaces pour notre application et nécessitent dans la boucle principale la mesure de l'effort réalisé Fv.

Un schéma en boucle ouverte a été développé permettant de déterminer directement l'intensité de commande $i_{th}$ en fonction de l'effort désiré Fc et de la vitesse $\dot{y}$, sans mesure de l'effort réalisé.

La description qui suit concerne la correction de la vitesse de sollicitation à partir d'une estimation des dynamiques de pression et introduit la notion de vitesse équivalente.

La compressibilité du fluide impose des caractéristiques force-vitesse Fv = fct($\dot{y}$,i) hystérétiques impropres à l'application du principe du modèle inverse formulé en fluide incompressible.

L'information de vitesse $\dot{y}$ a été corrigée sous la forme d'une vitesse équivalente $\dot{y}_e$ pour avoir une description univoque des caractéristiques : Fv = fct($\dot{y}_e$,i) permettant d'exploiter l'idée du modèle inverse.

La compressibilité du fluide intervient au niveau des équations de continuité des volumes de fluide des chambres de compression 4 et de détente 5 sous la forme d'un débit de compressibilité lié à la dérivée de la pression.

La vitesse $\dot{y}$ a donc été corrigée par un terme proportionnel à la dérivée de la pression de la chambre sous tension, pour revenir à une formulation analogue à celle obtenue sous l'hypothèse de fluide incompressible.

En négligeant la variation de pression au niveau de l'accumulateur, la pression de travail de la chambre sous tension est sensiblement égale à la perte de charge voulue au niveau de l'orifice de passage actif de la valve de contrôle $\Delta P_V$. Ce qui se traduit par l'expression:

$$\dot{y}_e = \dot{y} - \text{sign}(\dot{y})r(\dot{y})\ \frac{d\Delta Pv}{dt}$$

où $\dot{y}_e$ est la vitesse équivalente estimée en remplacement de $\dot{y}$.

La description qui suit concerne la mise en avance de phase de la consigne de la valve.

La fonction sign est relative à la phase de sollicitation, le coefficient r($\dot{y}$) est modulé en fonction de la vitesse relative de sollicitation.

Une valeur positive respecte la justification théorique liée à la prise en compte de la compressibilité du fluide.

Une valeur négative met en avance de phase la vitesse équivalente, ce qui permet de limiter la vitesse de fermeture de la valve aux faibles vitesses et donc évite tout blocage hydraulique.

La description qui suit concerne la mise en forme de la consigne en effort.

A partir d'une loi de commande U, issue par exemple de la théorie de la commande optimale, la consigne en effort est bornée au domaine dissipatif imposée par les caractéristiques limites physiques faible (valve ouverture maxi) et forte (valve ouverture mini) de l'amortisseur.

L'effort de commande dissipatif obtenu, correspondant à une stratégie semi-active, est noté Usa.

De plus, les caractéristiques naturelles du système à ouverture de valve donnée étant quadratiques, on met en forme la consigne, pour les faibles vitesses (seuil de vitesse Vo), sous la forme d'un raccord quadratique (Cv $\dot{y}$ |$\dot{y}$|) afin de lever l'indétermination de l'intensité de commande de la valve à vitesse nulle :

$$Fc = (1-q)\ Cv\ \dot{y}|\dot{y}| + q\ Usa,\quad q = \min\ (|\dot{y}|)/Vo,\ 1)$$

Un mode de réalisation préféré du schéma hydraulique de l'amortisseur semi-actif selon l'invention est représenté à la figure 3.

Dans la figure 3, P1 est la pression dans la chambre 5, P2 est la pression dans la chambre 4 et P3 est la pression dans l'accumulateur 11.

Cld désigne le clapet de détente et Clc désigne le clapet de compression, respectivement référencé 8 et 7 dans la figure 1.

Vc et Vd désignent les orifices de passage d'une valve 20, par exemple de type proportionnel 4/2 (cf. figure 3) ou bien les orifices de passage de deux valves 2/2 (cf. valves 9 et 10 de la figure 1).

Un avantage de ce schéma selon l'invention, est la possibilité de mise en oeuvre d'une seule valve avec un pilotage en parallèle des deux sections de passages Vd et Vc comme représenté à la figure 3.

Le principe de fonctionnement est repris ci-dessus.

En phase de détente (piston sortant), le clapet anti-retour de détente CLd court-circuite l'orifice de valve inactif Vc et permet de remplir librement la chambre 2. Le clapet CLc est fermé. Le pilotage de la section de passage de l'orifice actif de la valve Vd permet de contrôler la pression dans la chambre 1 et donc l'effort Fv exercé en détente par l'amortisseur.

Le fonctionnement est symétrique en compression.

L'effort développé par l'amortisseur peut être décomposé sous la forme :

$$F = \underbrace{(P1-P3)S1-(P2-P3)S2}_{Fv} - \underbrace{(P3-Pe)St}_{Fpneum}$$

On ne s'intéresse qu'à la partie hydraulique dissipative Fv.

A titre d'exemple, le mode de calcul dans la phase de détente est décrit ci-après en liaison avec la figure 3.

La perte de charge au niveau du clapet ouvert CLd est calculée en fonction de la vitesse $\dot{y}$ et de l'intensité de la valve selon une caractéristique tabulée. Il s'agit d'un terme correctif. L'intensité de commande permet de prendre en compte l'influence de l'ouverture de l'orifice Vc sur la loi de débit du clapet.

$$\Delta P_{CLd} = P3\text{-}P2 = G_{cld}(\dot{y},i_{th})$$

La perte de charge voulue au niveau de l'orifice de la valve actif Vd est calculée à partir de l'expression de Fc et de $\Delta$PCL :

$$\Delta P_V = P1\text{-}P3 = (Fc\text{-}\Delta P_{cl}S2)/S1$$

$\Delta$PV est dérivé numériquement puis multiplié par le gain variable en fonction de la vitesse r($\dot{y}$) pour déterminer la vitesse équivalente de travail :

$$\dot{y}_e = \dot{y}\text{-r}(\dot{y}) \frac{d\Delta Pv}{dt}$$

L'intensité de commande est calculée pour assurer le point de fonctionnement :

$$\Delta P_V = fct(i_{th}, \dot{y}_e)$$

Cette caractéristique a été préalablement identifiée sous la forme d'un gain non linéaire tabulé K($i_{th}$) tel que :

$$\Delta PV = K(i_{th}) \,|\dot{y}_e| \, \dot{y}_e$$

Le principe du modèle inverse consiste à déterminer $i_{th}$ tel que

$$i_{th} = K^{-1}\left(\frac{\Delta Pv}{|y_e|y_e}\right)$$

La description qui suit porte sur la boucle de commande directe 19 et concerne, plus particulièrement, le modèle inverse 15 de l'amortisseur.

L'élément 15 représenté à la figure 4 assure la fonction globale de modèle inverse.

Ce modèle inverse 15 de l'amortisseur permet de déterminer l'intensité de commande idéale $i_{th}$ en fonction de l'effort de consigne Fc et de la vitesse mesurée $\dot{y}$.

Il regroupe différents blocs, à savoir:

- un premier bloc 15A relatif à l'estimation de la perte de charge $\Delta$PCL du clapet ouvert,
- un deuxième bloc 15B relatif à l'estimation de la perte de charge $\Delta$PV de la valve active,
- un troisième bloc 15C relatif au calcul de l'intensité de commande $i_{th}$ idéale de la valve,
- un quatrième bloc 15D relatif au calcul du terme correctif $\delta\dot{y}$ à la vitesse $\dot{y}$,
- un sommateur 15E.

Le schéma interne du bloc 15 est fondé sur une interprétation physique du système. Il fait apparaître les différentes grandeurs physiques estimées, à savoir:

- la perte de charge estimée $\Delta$PCL du clapet ouvert:

  . en phase détente, cette perte de charge estimée $\Delta$PCL est une estimation de P3 - P2 pour le clapet de détente 8,
  . en phase compression, cette perte de charge estimée $\Delta$PCL est une estimation de P3 - P1 pour le clapet de compression 7,

- l'estimation de la perte de charge $\Delta$PV à réaliser par la valve de commande active située entre la chambre sous pression et l'accumulateur,

  . en phase détente, cette perte de charge $\Delta$PV est une estimation de P1 - P3 à réaliser pour la valve 10,
  . en phase compression, cette perte de charge $\Delta$PV est une estimation de P2 - P3 à réaliser pour la valve 9,

- la vitesse équivalente calculée $\dot{y}_e = \dot{y} + \delta\dot{y}$ à partir de la vitesse mesurée $\dot{y}$ et d'un terme de vitesse correctif $\delta\dot{y}$.

La description qui suit porte sur les fonctions détaillées des blocs composant le modèle inverse 15 de l'amortisseur.

Le bloc 15A assure le calcul de la perte de charge $\Delta$PCL au niveau du clapet ouvert, à savoir: le clapet 8 en détente et le clapet 7 en compression.

La grandeur de sortie $\Delta$PCL du bloc 15A est interpolée à partir d'un réseau de caractéristiques tabulées en fonction des grandeurs d'entrée $\dot{y}$ et ith de ce bloc 15A.

Le bloc 15B assure l'estimation de la perte de charge $\Delta$PV à réaliser par la valve de commande active placée entre la chambre sous pression et l'accumulateur. La sortie $\Delta$PV du bloc 15B est calculée en fonction des deux entrées du bloc Fc et $\Delta$PCL :

$$\Delta PV = ( Fc - \Delta PCL\ S2) / S1,$$

en détente (valve 10)

$$\Delta PV = (-Fc - \Delta PCL\ S1) / S2,$$

en compression (valve 9)

Afin de tenir compte de la compressibilité du fluide, l'information de vitesse mesurée $\dot{y}$ est corrigée par la sortie $\delta\dot{y}$ du bloc 15D pour former en sortie du sommateur 15E, une vitesse équivalente $\dot{y}_e = \dot{y} + \delta\dot{y}$.

Le bloc 15D calcule le terme de vitesse correctif $\delta\dot{y}$

$$\delta\dot{y} = \varepsilon(\dot{y})\ r(\dot{y})\ \frac{d\Delta Pv}{dt}\ ,$$

donc $\dot{y}_e$ devient

$$\dot{y}_e = \dot{y} + \varepsilon(\dot{y})\ r(\dot{y})\ \frac{d\Delta Pv}{dt}\ ,$$

avec

$\varepsilon(\dot{y})\qquad$ = -1 si $\dot{y}$ > 0 (détente)

= 1 si $\dot{y}$ < 0 (compression),

r($\dot{y}$)    gain variable fonction de la vitesse

$\dot{y}\frac{d\Delta Pv}{dt}$    dérivée temporelle de $\Delta PV$.

Le bloc 15C assure le calcul de l'intensité de commande ith idéale en fonction des deux entrées $\Delta PV$ et $\dot{y}_e$ du bloc 15C.

Les sections de passage des orifices Vc et Vd des valves 9 et 10, respectivement, ont été préalablement caractérisées par l'identification de gains non linéaires K(i) reliant la perte de charge mesurée à l'orifice considéré $\Delta PV$mesuré, la vitesse équivalente mesurée $\dot{y}_{emesuré}$ construite à partir des mesures de $\Delta PV$mesuré et $\dot{y}$, et l'intensité i sous la forme :

$$K(i) = \frac{\Delta P_{V\,mesuré}}{|\dot{y}_{e\,mesuré}|\,\dot{y}_{e\,mesuré}}\;,$$

Dans le bloc 15C, on exploite cette caractérisation en déterminant l'intensité ith satisfaisant

$$K(i_{th}) = \frac{\Delta Pv}{|\dot{y}_e|\,\dot{y}_e}\;,$$

expression dans laquelle:

K(i) est le gain non linéaire identifié à partir des mesures,

$\Delta PV$ est la perte de charge à réaliser, calculée en sortie du bloc 15B,

$\dot{y}_e$ est la vitesse équivalente calculée en sortie du sommateur 15E.

L'équation non linéaire d'inconnue ith précédente est reformulée en problème de minimisation.

ith est calculée comme l'intensité minimisant la fonction d'erreur $\varepsilon K(i)$ sur l'ensemble des fonctions admissibles:

$$\varepsilon K(i_{th}) \;=\; \min_{i}[\varepsilon K(i)] \;=\; \min_{i}\left[\left| K(i) \;-\; \frac{\Delta Pv}{|\dot{y}_e|\,\dot{y}_e}\right|\right].$$

## Revendications

1. Amortisseur semi-actif comportant un clapet de compression (7) et un clapet de détente (8), ledit amortisseur étant commandé par un circuit de commande comportant une boucle de commande principale directe (19) composée d'un modèle inverse de l'amortisseur basé sur des grandeurs physiques et adapté pour déterminer une valeur d'un courant électrique théorique ($i_{th}$) d'une valve de compression (9) et d'une valve de détente (10) de l'amortisseur, ou d'une valve unique (20) assurant ces deux fonctions, à partir d'une mesure d'une valeur d'une vitesse relative ($\dot{y}$) entre deux extrémités de l'amortisseur et d'une valeur de consigne d'effort (Fc), caractérisé en ce que le modèle inverse (15) comporte un bloc (15B) d'estimation de la perte de charge ($\Delta PV$) de la valve active (9,10),

   un bloc (15C) de calcul de l'intensité de commande ($i_{th}$) idéale de la valve active (9,10),
   un bloc (15D) de calcul d'un terme correctif ($\delta\dot{y}$) à la vitesse ($\dot{y}$), et
   un sommateur (15E) de calcul de la somme entre la vitesse ($\dot{y}$) et le terme correctif ($\delta\dot{y}$)pour l'élaboration d'une valeur de vitesse équivalente ($\dot{y}_e$),
   l'intensité de commande idéale ($i_{th}$) étant élaborée à partir de la perte de charge ($\Delta PV$) de la valve active et de la vitesse équivalente ($\dot{y}_e$).

2. Amortisseur selon la revendication 1, caractérisé en ce qu'il comporte en outre un bloc (15A) de calcul de la perte de charge ($\Delta PCL$) au niveau du clapet ouvert, parmi le clapet de détente (8) et le clapet de compression (7).

3. Amortisseur selon la revendication 2, dans lequel ladite grandeur de sortie (ΔPCL) dudit bloc (15A) de calcul de la perte de charge au niveau du clapet ouvert est interpolée à partir d'un réseau de caractéristiques tabulées en fonction des grandeurs d'entrée ($\dot{y}$) et ($i_{th}$) dudit premier bloc (15A).

4. Amortisseur selon la revendication 1, dans lequel ledit bloc (15B) d'estimation de la perte de charge de la valve active assure l'estimation de la perte de charge (ΔPV) à réaliser par la valve de commande active placée entre la chambre sous pression et l'accumulateur.

5. Amortisseur selon la revendication 4, dans lequel la sortie (ΔPV) dudit bloc (15B) d'estimation de la perte de charge de la valve active est calculée en fonction des deux entrées du bloc (Fc) et ΔPCL selon les relations suivantes :

$$\Delta PV = (Fc - \Delta PCL\ S2)\ /\ S1,$$

en détente (valve 10)

$$\Delta PV = (-\ Fc - \Delta PCL\ S1)\ /\ S2,$$

en compression (valve 9).

6. Amortisseur selon la revendication 1, dans lequel ledit terme correctif ($\delta\dot{y}$) de la vitesse est donné par l'expression :

$$\delta\dot{y} = \varepsilon(\dot{y})\ r(\dot{y})\ \frac{d\Delta pv}{dt}\ .$$

7. Amortisseur selon la revendication 1, dans lequel lesdites valves (9,10) ont été préalablement caractérisées par l'identification d'un gain non linéaire K(i) reliant la perte de charge mesurée (ΔPV) de la valve, la vitesse équivalente ($\dot{y}_e$), construite à partir des mesures de la perte de charge (ΔPV), de la vitesse ($\dot{y}$), et de l'intensité (i), selon la relation suivante :

$$k(i) = \frac{\Delta PV \cdot mesuré}{|\dot{y}_e\ mesuré|\ \dot{y}_e\ mesuré}\ ,$$

8. Amortisseur selon la revendication 7, dans lequel on détermine l'intensité de commande ($i_{th}$) minimisant une fonction d'erreur εK(i) sur l'ensemble des intensités admissibles, c'est-à-dire $i_{th}$ telle que :

$$\varepsilon K\left(i_{th}\right) = \min_{i}\left[\varepsilon K(i)\right] = \min_{i}\left[K(i) - \frac{\Delta PV}{|\dot{Y}_e|\dot{Y}_e}|\right],$$

expression dans laquelle :

K(i) est le gain non linéaire identifié à partir des mesures,
ΔPV est la perte de charge à réaliser, calculée en sortie du bloc (15B) d'estimation de la perte de charge de la valve active,
$\dot{y}$ est la vitesse équivalente calculée en sortie du sommateur (15E).

9. Amortisseur selon l'une quelconque des revendications 1 à 8, dans lequel une boucle secondaire de rétroaction (16) en effort introduit, audit courant électrique théorique principal ($i_{th}$) de commande, un terme correctif mineur (δi) de type proportionnel de manière à tenir compte d'une erreur d'effort (εF) entre ladite valeur de consigne d'effort (Fc) et une valeur mesurée d'une force effective (F) exercée.

10. Amortisseur selon l'une quelconque des revendications 1 à 9, dans lequel la consigne est donnée par l'expression :

$$Fc (1-q) Cv \; \dot{y}|\dot{y}| + q \; Usa, \quad q = \min (|\dot{y}|/Vo, 1)$$

dans laquelle :

- Usa désigne l'effort dissipatif correspondant à une vitesse élevée ;
- Vo désigne un seuil de vitesse au-dessous de laquelle la vitesse est faible ; et
- $Cv \; \dot{y}|\dot{y}|$ est un terme quadratique destiné à lever l'indétermination de l'intensité de commande $i_{th}$ à vitesse nulle.

**Patentansprüche**

1. Semiaktiver Stoßdämpfer mit einer Entspannungsklappe (7) und einer Kompressionsklappe (8), der durch eine Steuerschaltung gesteuert ist, welche einen direkten Hauptsteuerkreis (19) aufweist, der aus einem inversen Modell des Stoßdämpfers aufgebaut ist, das auf physikalischen Größen basiert und angepaßt ist, um einen theoretischen Wert eines elektrischen Stroms ($i_{th}$) eines Kompressionsventils (9) und eines Entspannungsventils (10) des Stoßdämpfers oder eines einzigen, beide Funktionen wahrnehmenden Ventils (20) ausgehend von einer Messung eines Wertes einer relativen Geschwindigkeit ($\dot{y}$) zwischen zwei Enden des Stoßdämpfers und einem Kraft-Sollwert (Fc) zu berechnen, dadurch gekennzeichnet, daß das inverse Modell (15) aufweist:

   einen Block (15B) zum Abschätzen des Druckverlustes (APV) des aktiven Ventils (9, 10),
   einen Block (15C) zum Berechnen der idealen Steuerstromstärke ($i_{th}$) des aktiven Ventils (9, 10),
   einen Block (15D) zum Berechnen eines Korrekturterms ($\delta\dot{y}$) zu der Geschwindigkeit ($\dot{y}$),
   einen Summierer (15E) zum Berechnen der Summe zwischen der Geschwindigkeit ($\dot{y}$) und dem Korrekturterm ($\delta\dot{y}$) zur Gewinnung eines Äquivalentgeschwindigkeitswertes ($\dot{y}_e$),
   wobei die ideale Steuerstromstärke ($i_{th}$) ausgehend von dem Druckverlust ($\Delta PV$) des aktiven Ventils und der Äquivalentgeschwindigkeit ($\dot{y}_e$) gewonnen wird.

2. Stoßdämpfer nach Anspruch 1, dadurch gekennzeichnet, daß er ferner einen Block (15A) zum Berechnen des Druckverlustes ($\Delta PCL$) an der jeweils offenen Klappe, der Entspannungsklappe (8) und der Kompressionsklappe (7), aufweist.

3. Stoßdämpfer nach Anspruch 2, bei dem die Ausgangsgröße ($\Delta PCL$) des Blocks (15A) zum Berechnen des Druckverlustes an der offenen Klappe anhand eines in Abhängigkeit von den Eingangsgrößen ($\dot{y}$) und ($i_{th}$) des ersten Blocks (15A) tabellierten Gitters von Kenngrößen interpoliert wird.

4. Stoßdämpfer nach Anspruch 1, bei dem der Block (15B) zum Abschätzen des Druckverlustes ($\Delta PV$) des aktiven Ventils die Abschätzung des Druckverlustes ($\Delta PV$) gewährleistet, der von dem aktiven Steuerventil zu realisieren ist, das zwischen der Druckkammer und dem Akkumulator angeordnet ist.

5. Stoßdämpfer nach Anspruch 4, bei dem der Ausgang ($\Delta PV$) des Blocks (15B) zum Abschätzen des Druckverlustes des aktiven Ventils in Funktion der zwei Eingänge (Fc) und $\Delta PCL$ des Blocks nach folgenden Beziehungen berechnet wird:

$$\Delta PV = (Fc - \Delta PCL \; S2)/S1$$

bei Entspannung (Ventil 10)

$$\Delta PV = (-Fc - \Delta PCL \; S1)/S2$$

bei Kompression (Ventil 9).

6. Stoßdämpfer nach Anspruch 1, bei dem der Korrekturterm ($\delta\dot{y}$) der Geschwindigkeit gegeben ist durch den Ausdruck:

$$\delta \dot{y} = \varepsilon(\dot{y}) \ r(\dot{y}) \ \frac{d\Delta pv}{dt} \ .$$

**7.** Stoßdämpfer nach Anspruch 1, dadurch gekennzeichnet, daß die Ventile (9, 10) vorab durch die Identifizierung einer nichtlinearen Verstärkung K(i) charakterisiert worden sind, der den gemessenen Druckverlust (ΔPV) des Ventils und die Äquivalentgeschwindigkeit ($\dot{y}_e$), die anhand von Messungen des Druckverlustes (ΔPV), der Geschwindigkeit ($\dot{y}$) und der Stromstärke (i) konstruiert ist, gemäß der folgenden Beziehung verknüpft:

$$k(i) = \frac{\Delta pv_{gemessen}}{\left|\dot{y}_{e \ gemessen}\right| \dot{y}_{e \ gemessen}} \ .$$

**8.** Stoßdämpfer nach Anspruch 7, bei dem die Steuerstromstärke ($i_{th}$) unter Minimierung einer Fehlerfunktion εK(i) auf der Menge der zulässigen Stromstärken festgelegt ist, d. h. derart, daß

$$\varepsilon \ K(i_{th}) = \min_{i}\left[\varepsilon \ K(i)\right] = \min_{i}\left[\left|K(i) - \frac{\Delta PV}{\left|\dot{y}_e\right|\dot{y}_e}\right|\right]$$

wobei

K(i) die anhand von Messungen identifizierte nichtlineare Verstärkung ist,
ΔPV der zu realisierende Druckverlust ist, berechnet am Ausgang des Blocks (15B) zur Abschätzung des Druckverlustes des aktiven Ventils,
$\dot{y}$ die berechnete Äquivalentgeschwindigkeit am Ausgang des Summierers (15E) ist.

**9.** Stoßdämpfer nach einem beliebigen der Ansprüche 1 bis 8, bei dem ein sekundärer Kraft-Rückwirkungskreis (16) zu dem theoretischen elektrischen Haupt-Steuerstrom ($i_{th}$) einen kleineren Korrekturterm (δi) vom proportionalen Typ hinzufügt, um einen Kraft-Fehler (εF) zwischen dem Kraft-Sollwert (Fc) und einem Meßwert einer effektiv ausgeübten Kraft (F) zu berücksichtigen.

**10.** Stoßdämpfer nach einem beliebigen der Ansprüche 1 bis 9, bei dem der Sollwert gegeben ist durch den Ausdruck

$$Fc \ (1-q) \ Cv \ \dot{y}\left|\dot{y}\right| + q \ Usa, \quad q = \min\left(\left|\dot{y}\right|/Vo, 1\right),$$

wobei

- Usa die einer hohen Geschwindigkeit entsprechende Dissipationskraft bezeichnet,
- Vo einen Schwellwert der Geschwindigkeit bezeichnet, unterhalb von dem die Geschwindigkeit gering ist, und
- Cv $\dot{y}\left|\dot{y}\right|$ ein quadratischer Term ist, der dazu bestimmt ist, die Unbestimmtheit der Steuerstromstärke bei Geschwindigkeit Null zu beseitigen.

**Claims**

**1.** A semi-active damper including a compression non-return valve (7) and an expansion non-return valve (8), said damper being controlled by a control circuit including a direct main control loop (19) composed of an inverse model of the damper based on physical magnitudes and being adapted to determine an ideal value for an electric current ($i_{th}$) for a compression controlled-restriction valve (9) and an expansion controlled-restriction valve (10) of the damper, or a single valve (20) ensuring both functions, on the basis of a measured value for the relative speed ($\dot{y}$)

between two ends of the damper and of a force reference value (Fc), the damper being characterized in that the inverse model (15) comprises:

- · a block (15B) for estimating the headloss ($\Delta P_V$) of the active controlled-restriction valve (9, 10);
- · a block (15C) for computing the ideal control current ($i_{th}$) for the controlled-restriction valve (9, 10);
- · a block (15D) for computing the corrective term ($\delta\dot{y}$) for the speed ($\dot{y}$); and
- · a summing circuit (15E) for computing the sum of the speed ($\dot{y}$) and the corrective term ($\delta\dot{y}$) for producing an equivalent speed $\dot{y}_e$,

the ideal control current ($i_{th}$) being produced on the basis of the headloss ($\Delta P_V$) of the active controlled-restriction valve and of the equivalent speed $\dot{y}_e$.

2. A damper according to claim 1, characterized in that it further includes a first block (15A) for computing the headloss ($\Delta P_{CL}$) in the open non-return valve, among the expansion non-return valve (8) and the compression non-return valve (7).

3. A damper according to claim 2, in which said magnitude ($\Delta P_{CL}$) output from said block (15A) for computing the headloss in the open non-return valve is interpolated from an array of characteristics tabulated as a function of the input magnitudes ($\dot{y}$) and ($i_{th}$) of said first block (15A).

4. A damper according to claim 1, in which said block (15B) for estimating the headloss in the active controlled-restriction valve estimates the headloss ($\Delta P_V$) to be achieved by the active controlled-restriction valve placed between the chamber under pressure and the accumulator.

5. A damper according to claim 4, in which the output ($\Delta P_V$) from said block (15B) for estimating the headloss in the active controlled-restriction valve is computed as a function of the two inputs to the block, (Fc) and ($\Delta P_{CL}$) according to the following relationships:

$$\Delta P_V = [Fc - \Delta P_{CL}\ S2]/S1$$

in expansion (valve 10)

$$\Delta P_V = [-Fc - \Delta P_{CL}\ S1]/S2$$

in compression (valve 9).

6. A damper according to claim 1, in which said corrective term ($\delta\dot{y}$) for the speed is given by the expression:

$$\delta\dot{y} = \varepsilon(\dot{y})\ r(\dot{y})\ \frac{d\Delta P_V}{dt}$$

7. A damper according to claim 1, in which said controlled-restriction valves (9, 10) are previously characterized by identifying a non-linear gain K(i) relating the measured headloss ($\Delta P_V$) of the valve, the equivalent speed ($\dot{y}_e$) built up from the measured headloss ($\Delta P_V$), speed $\dot{y}$, and the current $\underline{i}$, according to the following relationship:

$$K(i) = \frac{\Delta P_{Vmeasured}}{|\dot{y}_{emeasured}|\ \dot{y}_{emeasured}}$$

8. A damper according to claim 7, in which the control current ($i_{th}$) is determined by minimizing an error function $\varepsilon K$ (i) over the set of acceptable currents, i.e. $i_{th}$ such that:

$$\varepsilon K(i_{th}) \;=\; \min_i[\varepsilon K(i)] \;=\; \min_i \left[ \left| K(i) - \frac{\Delta P_V}{|\dot{y}_e|\;\dot{y}_e} \right| \right]$$

in which expression:

K(i) is the non-linear gain identified from the measurements;
$\Delta P_V$ is the headloss to be achieved, as computed at the output from the block (15B) for estimating the headloss in the active controlled-restriction valve; and
$\dot{y}_e$ is the equivalent speed computed at the output of the summing circuit (15E).

9. A damper according to any one of claims 1 to 8, in which a secondary force feedback loop (16) introduces a minor corrective term into said main ideal electric control current ($i_{th}$), which minor term ($\delta i$) is of the proportional type, thereby taking account of a force error ($\varepsilon F$) between the reference force (Fc) and a measured value of the force (F) actually exerted.

10. A damper according to any one of claims 1 to 9, in which the reference is given by the expression:

$$Fc = (1-q)\; Cv\, \dot{y}\, |\, \dot{y}\, | + q\; Usa, \quad q = \min(\, |\, \dot{y}\, | / Vo,\, 1)$$

·   Usa designates the dissipative force corresponding to a high speed;
·   Vo designates a threshold speed below which the speed is low; and
·   $Cv\, \dot{y}\, |\, \dot{y}\, |$ is a quadratic term designed to remove the uncertainty concerning the control current $i_{th}$ to be applied at zero speed.

# FIG.1

# FIG.2

# FIG. 3

FIG.4

EP 0 816 141 B1